# FASCICULE DE BREVET EUROPEEN

(11) **EP 1 714 835 B1**
(45) Date de publication et mention de la délivrance du brevet: **26.11.2008**
(21) Numéro de dépôt: 06290622.7
(22) Date de dépôt: 18.04.2006
(51) Int. Cl.: B60R 19/48, H01Q 1/32

(54) **Pièce de renfort pour véhicule automobile et utilisation d'une telle pièce comme antenne**
Verstärkungsteil für ein Kraftfahrzeug und Verwendung desselben als Antenne
Reinforcement part for an automotive vehicle and utilisation of such a part as an aerial

(30) Priorité: 18.04.2005 FR 0503871
(43) Date de publication de la demande: 25.10.2006
(73) Titulaire: Compagnie Plastic Omnium, 69007 Lyon (FR)
(72) Inventeur: Grando, Jérome, 38390 Vertrieu (FR); Jaud, Bertrand, 69006 Lyon (FR)
(74) Mandataire: de la Bigne, Guillaume Michel Marie

(56) Documents cités:
- EP-A- 0 854 536
- EP-A- 0 892 458
- EP-A- 1 247 696
- DE-A1- 4 116 232
- DE-C1- 19 636 584

## Description

### Domaine technique

L'invention concerne des pièces de renfort de pièce de carrosserie de véhicule automobile.

### Etat de la technique

On connaît déjà, dans l'état de la technique, une pièce de renfort de pièce de carrosserie de véhicule automobile, comportant au moins une bande de matière thermoplastique.

Une telle pièce de renfort est par exemple utilisée pour renforcer une crosse de pare-chocs.

Par ailleurs on connaît des antennes embarquées qui sont des pièces métalliques rapportées sur les véhicules lors d'opérations de montage spécifiques.

Du document EP 0 854 536, on connait également une pièce en plastique renforcée par un tissu conducteur formant antenne.

### Problème posé par cet état de la technique

On souhaiterait éviter d'avoir à prévoir une opération de montage spécifique pour rapporter l'antenne sur le véhicule.

### Solution proposée par l'invention

A cet effet, on prévoit une pièce de renfort pour véhicule automobile, comportant au moins une bande de matière thermoplastique, caractérisée en ce que la pièce est recouverte au moins partiellement d'un revêtement électriquement conducteur de manière qu'il existe au moins une direction et un plan de projection tels que :
- la projection du revêtement dans le plan de projection et selon cette direction définit une première zone,
- la projection de la pièce définit une seconde zone,
- la première zone et son complément dans la seconde zone sont séparées par une frontière qui intercepte la projection d'au moins une bande de matière,
- la frontière est sensiblement transversale à la projection interceptée.

Ainsi, il n'est plus nécessaire de prévoir une opération de montage spécifique pour rapporter l'antenne sur le véhicule puisque l'antenne peut être réalisée simplement par application d'un revêtement conducteur sur la pièce. L'antenne fait alors partie intégrante de la pièce de renfort.

De plus, du fait que la frontière intercepte les bandes de matière transversalement, on peut facilement isoler la partie de la pièce sur laquelle on souhaite appliquer le revêtement et réaliser cette application par pulvérisation de matière électriquement conductrice telle que de la peinture contenant des particules métalliques.

### Modes de réalisation particuliers avantageux

De préférence, la pièce comprend une pluralité de bandes définissant au moins un ajour dans la pièce.

Le revêtement est facile à appliquer uniformément sur la bande, par exemple à l'aide d'un tampon. De plus, dans le cas où le revêtement est appliqué par pulvérisation de matière électriquement conductrice, il est particulièrement avantageux de pulvériser la matière perpendiculairement à la bande pour s'assurer que la bande est uniformément recouverte.

De manière optionnelle, une pièce de matière plastique selon l'invention peut comporter l'une ou plusieurs des caractéristiques suivantes :
- la première zone est connexe ;
- la pièce forme un renfort de crosse de pare-chocs.

L'invention concerne également une utilisation d'une bande de matière thermoplastique d'une pièce telle que définie précédemment comme antenne.

De préférence, l'antenne est choisie parmi une antenne TV, une antenne GPS, une antenne radio AM/FM, une antenne de téléphonie mobile par exemple selon le standard GSM, un élément de récepteur de télécommande (Remote Keyless Entry) ou un élément de capteur capacitif.

### Description d'un exemple

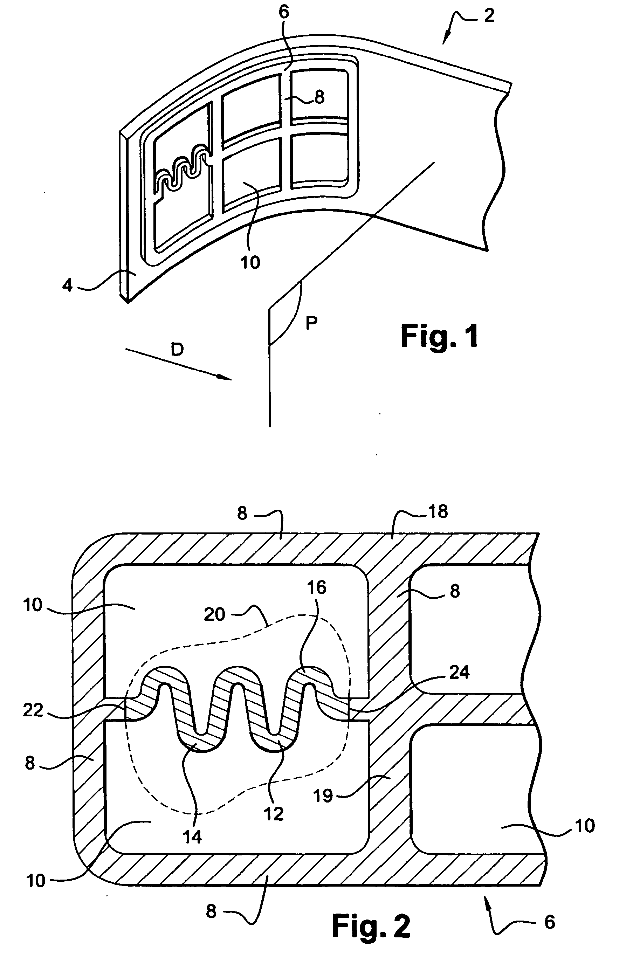

La figure 1 représente un pare-chocs 2 dont une crosse 4 est renforcée par une pièce 6 de renfort en matière thermoplastique. La pièce 6 est rapportée sur une face interne de la crosse 4.

On définit un plan de projection P et une direction de projection D. La figure 2 représente la projection de la pièce 6 sur le plan P selon la direction D. Dans l'exemple représenté, la pièce 6 est sensiblement plane et le plan P est sensiblement parallèle à la pièce 6. La direction D est orthogonale au plan P.

La pièce 6, dont une partie est représentée plus en détail sur la figure 2, comprend une pluralité de bandes 8 de matière thermoplastique définissant des ajours 10 dans la pièce 6.

La pièce 6 comprend en outre une bande 12 de matière thermoplastique conformée pour former une antenne une fois que sa face visible sur le dessin est recouverte d'un revêtement 14 électriquement conducteur, lequel recouvre ainsi partiellement la pièce 6.

La pièce 6 est formée d'un seul tenant par moulage de matière thermoplastique.

La projection du revêtement 14 dans le plan de projection P et selon la direction D définit une première zone connexe 16.

La projection de la pièce 6 définit une seconde zone 18.

On définit le complément 19 de la première zone 16 dans la seconde zone 18. La première zone 16 et son complément 18 sont séparés par une frontière 20.

La frontière 20 intercepte la projection de la bande de matière 12 sensiblement transversalement selon deux segments 22 et 24. En d'autres termes, la bande de matière 12 est recouverte par le revêtement 14 sur toute sa largeur, entre les segments 22 et 24.

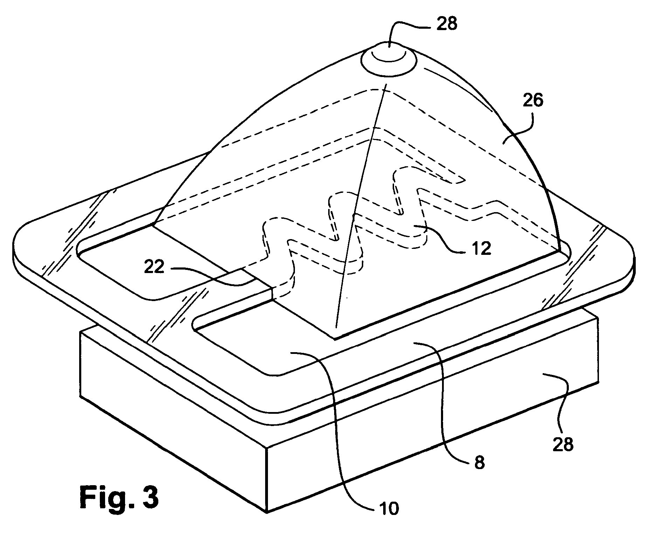

L'application du revêtement 14 sur la bande de matière 12 est obtenue de façon simple par pulvérisation de matière électriquement conductrice sur la bande 12. Pour cela, on peut utiliser une cloche de peinture 26 comme représenté sur la figure 3. La cloche 26 comprend un orifice 28 dans lequel on place un dispositif (non-représenté) de pulvérisation de matière électriquement conductrice.

La cloche est placée sur la pièce 6 de manière qu'elle ne recouvre que la bande 12 qui forme l'antenne. Ainsi, la matière pulvérisée est confinée dans la cloche et ne recouvre pas d'autres bandes 8 que la bande 12 qui forme l'antenne.

Grâce aux ajours 10 qui entourent la bande de matière 12, la matière pulvérisée dans la cloche 26 qui ne rencontre pas la bande 12, traverse les ajours 10 sans recouvrir aucune autre partie de la pièce 6. Ainsi, la forme de l'antenne est exactement la même que celle de la bande 12 et peut donc être précisément définie lors de la conception et la fabrication de la bande 12.

Il est ainsi très facile de recouvrir une partie de la pièce de renfort de matière électriquement conductrice sans requérir à l'utilisation de techniques fastidieuses telles que le marouflage.

De manière optionnelle, on peut placer un bac 28 de réception de matière sous la cloche, pour recueillir la matière pulvérisée qui a traversé les ajours 10.

## Revendications

1. Pièce (6) de renfort de pièce de carrosserie de véhicule automobile, comportant au moins une bande (8, 12) de matière thermoplastique, **caractérisée en ce que** la pièce est recouverte au moins partiellement d'un revêtement (14) électriquement conducteur résultant d'une application par pulvérisation ou tamponnage de matière électriquement conductrice, de manière qu'il existe au moins une direction (D) et un plan (P) de projection tels que :
- la projection du revêtement (14) dans le plan de projection et selon cette direction définit une première zone (16),
- la projection de la pièce (6) définit une seconde zone (18),
- la première zone (16) et son complément (19) dans la seconde zone (18) sont séparées par une frontière (20) qui intercepte la projection d'au moins une bande de matière (12),
- la frontière (20) est sensiblement transversale à la projection interceptée.

2. Pièce (6) pour véhicule automobile selon la revendication 1, comprenant une pluralité de bandes (8, 12) définissant au moins un ajour (10) dans la pièce (6).

3. Pièce selon la revendication 1 ou 2, dans laquelle la première zone (16) est connexe.

4. Pièce (6) selon l'une quelconque des revendications précédentes, formant un renfort (6) de crosse (4) de pare-chocs (2).

5. Utilisation d'une bande (12) de matière thermoplastique d'une pièce selon l'une quelconque des revendications précédentes comme antenne.

6. Utilisation d'une bande (12) de matière selon la revendication 5, dans laquelle l'antenne est choisie parmi une antenne TV, une antenne GPS, une antenne radio AM/FM, une antenne de téléphonie mobile par exemple selon le standard GSM, un élément de récepteur de télécommande (Remote Keyless Entry) ou un élément de capteur capacitif.

7. Procédé de fabrication d'une pièce de renfort selon l'une quelconque des revendications 1 à 4, **caractérisé en ce qu'**il comprend les étapes suivantes :
- moulage en matière thermoplastique d'une pièce de renfort de pièce de carrosserie de véhicule automobile, comportant au moins une bande de matière, la pièce étant d'un seul tenant,
- application par pulvérisation ou tamponnage de matière électriquement conductrice sur la bande.

## Claims

1. A reinforcement piece (6) for reinforcing a piece of motor vehicle bodywork, the reinforcement piece comprising at least one strip (8, 12) of thermoplastic material, and being **characterized in that** it is covered at least in part by an electrically-conductive covering (14) obtained by spraying or padding electrically-conductive material in such a manner that there exist at least one projection direction (D) and one projection plane (P) such that:
• projecting the covering (14) onto the projection plane in said direction defines a first zone (16);
• the projection of the piece (6) defines a second zone (18);
• the first zone (16) and its complement (19) in the second zone (18) are separated by a boundary (20) that intercepts the projection of at least one strip of material (12); and
• the boundary (20) extends substantially transversely to the intercepted projection.

2. A motor vehicle piece (6) according to claim 1, comprising a plurality of strips (8, 12) defining at least one opening (10) in the piece (6).

3. A piece according to claim 1 or claim 2, in which the first zone (16) is connected.

4. A piece (6) according to any preceding claim, forming reinforcement (6) for an overrider (4) of a bumper (2).

5. The use of a strip (12) of thermoplastic material of a piece according to any preceding claim as an antenna.

6. The use of a strip (12) of material according to claim 5, in which the antenna is selected from a TV antenna, a GPS antenna, an AM/FM radio antenna, an antenna for a mobile telephone, e.g. using the GSM standard, an element for remote keyless entry, or a capacitive sensor element.

7. Method for manufacturing a reinforcement piece according to any one of claims 1 to 4, **characterized in that** it comprises the following steps :
• molding in thermoplastic material a reinforcement piece for reinforcing a piece of motor vehicle bodywork, comprising at least one strip, the piece being made as a simple piece,
• application by spraying or padding of electrically-conductive material on the strip.

## Patentansprüche

1. Teil (6) zum Verstärken eines Karosserieteils eines Kraftfahrzeugs, umfassend wenigstens einen Streifen (8, 12) aus thermoplastischem Material, **dadurch gekennzeichnet, dass** das Tell wenigstens teilweise mit einer elektrisch leitfähigen mittels Pulverbeschichten oder Aufdrucken aufgebrachten Beschichtung (14) von elektrisch leitfähigem Material überzogen ist, so dass wenigstens eine Projektionsrichtung (D) und eine Projektionsebene (P) vorhanden ist, so dass:
- die Projektion der Beschichtung (14) in die Projektionsebene und gemäß dieser Richtung eine erste Zone (16) definiert,
- die Projektion des Teils (6) eine zweite Zone (18) definiert,
- die erste Zone (16) und ihre Ergänzung (19) in der zweiten Zone (18) durch eine Grenze (20) getrennt sind, welche die Projektion von wenigstens einem Materialstreifen (12) abdeckt,
- die Grenze (20) im Wesentlichen transversal zur abgedeckten Projektion ist.

2. Teil (6) für ein Kraftfahrzeug nach Anspruch 1, umfassend eine Vielzahl von Streifen (8,12), die wenigstens einen Durchbruch (10) im Teil (6) definieren.

3. Teil nach Anspruch 1 oder 2, wobei die erste Zone (13) zusammenhängend ist.

4. Teil (6) nach einem der vorhergehenden Ansprüche, das eine Verstärkung (6) eines Seitenschenkels (4) eines Stoßfängers bildet.

5. Verwendung eines Streifens (12) aus thermoplastischem Material eines Teils nach einem der vorhergehenden Ansprüche als Antenne.

6. Verwendung eines Streifens (12) aus einem Material nach Anspruch 5, wobei die Antenne aus einer Fernsehantenne, einer GPS-Antenne, eine AM/FM-Radioantenne, eine Mobiltelefonantenne gemäß dem GSM-Standard, einem Fernbedienungsempfängerelement (Remote Keyless Entry) oder einem kapazitiven Sensorelement gewählt wird.

7. Verfahren zur Fertigung eines Verstärkungsteils nach einem der Ansprüche 1 bis 4, **dadurch gekennzeichnet, dass** es die folgenden Schritte umfasst:
- Formen eines Teils zum Verstärken eines Karosserieteils eines Kraftfahrzeugs aus thermoplastischem Material, umfassend wenigstens einen Materialstreifen, wobei das Teil aus einem Stück besteht,
- Aufbringen von elektrisch leitfähigem Material auf dem Streifen durch Sprühen oder Aufdrücken.
